# EUROPÄISCHE PATENTSCHRIFT

(11) **EP 0 353 672 B1**
(45) Veröffentlichungstag und Bekanntmachung des Hinweises auf die Patenterteilung: **06.12.1995**
(21) Anmeldenummer: 89114047.7
(22) Anmeldetag: 29.07.1989
(51) Int. Cl.: B64C 11/26, F04D 29/38

(54) **Fasertechnische Propellerschaufeln**
Composite propeller blades
Pale d'hélice en composite

(30) Priorität: 03.08.1988 DE 3826378
(43) Veröffentlichungstag der Anmeldung: 07.02.1990
(73) Patentinhaber: MTU MOTOREN- UND TURBINEN-UNION MÜNCHEN GMBH, D-80976 München (DE)
(72) Erfinder: Merz, Herbert, D-8000 München 50 (DE)

(56) Entgegenhaltungen:
- DE-C- 3 710 321
- FR-A- 2 616 180
- US-A- 3 694 104
- US-A- 3 737 250

## Beschreibung

Die Erfindung betrifft eine fasertechnische Propellerschaufel gemäß dem Oberbegriff des Patentanspruchs 1.Eine solche Propellerschaufel ist aus der DE-C-3710321 bekannt.

Die biegestarr gelagerten Schaufeln moderner Triebwerke mit hohem Bypass-Verhältnis, insbesondere Propfan-Schaufeln sollen zur Gewichtsreduzierung möglichst aus faserverstärkten Kunststoffen hergestellt werden. Dies ist wegen der hohen Rotordrehzahlen und den daraus resultierenden hohen Fliehkraftbelastungen und den aerodynamischen Gasschubkräften dann problematisch, wenn zusätzlich von vorne anfliegende Fremdobjekte wie beispielsweise Vögel auf die Schaufelblätter treffen. Dabei entstehen hohe Biegebelastungen, die mittels der herkömmlichen Propellerschaufeln und deren Befestigungsvorrichtungen nicht mehr aufgenommen werden können.

Aus der US-A-37 37 250 (vergl. Fig. 2) ist eine Propellerschaufel bekannt, bei der unter der Außenhaut an dem im Mittelbereich der Schaufel angeordneten Faserstrang beidseitig äußere Faserstränge anschließen, welche benachbart zum mittleren Faserstrang Zugbolzen umschlingen, die ihrerseits an einem Schaft befestigt sind. Bei dieser vorbekannten Konstruktion sind aber alle Faserstränge (der mittlere und die seitlichen) in derselben Weise mit funktionsgleichen Zugbolzen befestigt. Eine Trennung in der Aufnahme von Zugkräften und Torsionskräften findet dabei nicht statt, so daß bei Überlastung der Schaufel ein totaler Bruch auftritt, d. h. daß die seitlichen und der mittlere Zugbolzen brechen. Am Rotor ist die gesamte Schaufel mit nur einem Querbolzen befestigt.

Aufgabe der vorliegenden Erfindung ist es, eine gattungsgemäße Rotorschaufel so auszubilden, daß einerseits Fliehkräfte, andererseits Biege- und Torsionskräfte mittels geeigneter Befestigungen aufgenommen werden und bei Versagen einer Befestigung ein totaler Bruch und ein Wegfliegen des Blattes durch Lastumlagerung auf die andere Befestigung verhindert wird (Redundanz). Gleichzeitig soll bei Auftreffen von Fremdkörpern verhindert werden, daß das gesamte Rotorblatt abreißt. Insbesondere soll das schwere Fußteil mit der Nabe verbunden bleiben. Schließlich soll eine möglichst gewichtssparende Ausführung geschaffen werden.

Die Aufgabe wird erfindungsgemäß mit den im Kennzeichen des Patentanspruches 1 angegebenen Merkmalen gelöst.

Die Vorteile der Erfindung bestehen darin, daß die Faserstränge, welche die Hauptzugkräfte (Fliehkräfte) der Propellerschaufel übertragen, lediglich auf Zug belastet werden und nirgends unterbrochen sind.

Dadurch ist eine maximale Ausnützung der hohen, durch die Faserwerkstoffe übertragbaren Kräfte erzielbar. Insbesondere im Bereich der Schaufelbefestigung, also in der Blattmitte, ist somit eine fasergerechte Krafteinleitung erzielbar. Die durch Biege- und Torsionsmomente entstehenden Belastungen werden vorteilhafterweise vorwiegend durch die Außenhaut aufgenommen und mittels günstiger Hebelarme an den angeformten Flanschen auf den Rotor übertragen. Der vorwiegend zugbelastete Faserstrang-Schaft wird dadurch von für ihn ungünstigen Belastungsarten freigehalten. Die doppelte Befestigung führt weiterhin dazu, daß bei Versagen einer der beiden Befestigungen durch Gewaltbruch oder Dauerbruch die Schaufelkräfte zeitweilig von der anderen Befestigung übernommen werden können und somit die Propellerschaufel nicht abreißt.

Bei Auftreffen von Fremdkörpern gewährleistet diese Anordnung ferner, daß injedem Fall der schwere Schaufelfuß am Rotor verbleibt und nur ein relativ kleiner, leichter Teil abgetrennt wird. Dies hat den Vorteil, daß Berstschutzeinrichtungen zum Abfangen der Bruchstücke leichter ausgeführt werden können. Schließlich erlaubt diese Anordnung eine Gewichtsreduzierung der Propellerschaufel, wenn beispielsweise der Schaufelkern aus Werkstoffen geringer Dichte aufgebaut ist.

Eine weitere Ausgestaltung der Erfindung sieht vor, daß die Zugbolzen in Richtung der Schaufelprofilsehne ausgerichtet sind. Dadurch wird eine große Baulänge der Zugbolzen erreicht und eine günstige Verlegung der sie umschlingenden Faserschlaufen ermöglicht.

In alternativer Ausgestaltung sind die Zugbolzen senkrecht zur Richtung der Schaufelprofilsehne ausgerichtet. Diese Anordnung ermöglicht eine kurze Schaufelfußlänge, wodurch vorteilhafterweise eine kompakte Anordnung des Propeller-Verstellmechanismus möglich ist.

Eine weitere vorteilhafte Ausgestaltung der Erfindung besteht darin, daß die Propellerschaufel mittels eines im Schaft in Schaufelprofilrichtung steckenden Querbolzens befestigt ist und der Querbolzen in rotorseitig angebrachten Exzenterbuchsen gelagert ist. Hierdurch ist eine platzsparende, einfache Befestigung erzielbar, wobei die Vorspannung oder das Einbauspiel der den Schaft umschließenden Faserstränge einstellbar ist.

Im Rahmen der Erfindung wird weiter vorgesehen, daß zwischen Flansch und Rotor ein tellerartiges Dämpfungsglied vorgesehen ist, das in seinem Mittelteil an die Kontur des Schaftes angepaßt ist. Dadurch werden im Betrieb auftretende Schwingungen gedämpft und eine zusätzliche seitliche Abstützung der Reaktionskräfte ist möglich. Zusätzlich wird die Schaftumschlingung vor Beschädigungen von radial innen geschützt.

Weiterhin sollen gemäß einer Ausführungsform der Erfindung die Faserstränge fächerartig und sich gegenseitig überkreuzend verlegt sein. Dadurch wird eine gute Lasteinleitung in die Zugbolzen sowie eine Schaufelversteifung gegenüber Torsion und Verwindung erreicht und ein schlagzäher Schaufelkörper geschaffen.

Vorzugsweise ist weiterhin der Schaufelkern als schubsteifer Leichtbaukern aufgebaut. Dadurch ist ein geringes Schaufelgewicht bei gleichzeitig hoher Biegesteifigkeit erreichbar. Vorteilhafterweise besteht der Schaufelkern aus Leichtholzebenen mit dazwischen angebrachten CFK-Schubverrippungen.

Eine andere vorteilhafte Weiterbildung der Erfindung sieht vor, daß die Außenhaut aus faserverstärktem Kunststoff besteht. Dadurch wird bei guter Zugkraftübertragung ein geringes Baugewicht und eine gute Verbindungsmöglichkeit mit den darunterliegenden Fasersträngen erzielt. Vorteilhafterweise haben die Fasern der Außenhaut einen hohen E-Modul, während die umschlingenden Faserstränge einen niedrigen E-Modul aufweisen. Dadurch wird eine große Biege- und Torsionssteifigkeit erreicht. Gleichzeitig bleibt das Innere der Propellerschaufel schlagzäh und erhöht somit den Widerstand gegen fremdkörperinduzierte Schäden.

Eine vorteilhafte Weiterbildung der Ausführungsform sieht vor, daß die inneren Faserstränge mehrlagig aufgebaut sind, wobei der E-Modul der inneren Faserstranglagen kleiner ist als der der äußeren Faserstranglagen.

Es wird erstens im Bereich der Umschlingung der Zugbolzen, d. h. der Faserschlaufe eine anderenfalls entstehende Spannungsüberhöhung (Spannungsspitze) der inneren Lagen abgebaut und somit ein vorzeitiger Schaufelbruch verhindert, und zweitens wird der für die Biegesteifigkeit günstige Übergang zu steifen Außenlagen ohne abrupten Steifigkeitssprung gestaltet. Drittens wird durch geeignete Faserwahl der Wärmeausdehnungskoeffizient der Faserstränge schrittweise dem der Blattaußenhaut angepaßt.

Eine weitere vorteilhafte Ausbildung der Faserstrang-Schlaufen besteht darin, daß in an sich bekannter Weise die Schlaufe in ihrer axialen, d. h. ihrer Sehnenlängen-Erstreckung durch starre oder verschraubbare Begrenzungen eingespannt ist. Hierdurch wird ein vorzeitiger Querdruckbruch der Schlaufenlagen in axialer Richtung vermieden, der ein vorzeitiges Versagen der Strangschlaufe zur Folge hätte.

Vorzugsweise bestehen die Fasern der Außenhaut aus hoch- oder mittelmoduligen Kohlefasern, die sich durch eine hohe Steifigkeit bei niedriger Dichte auszeichnen. Die Faserstränge bestehen vorzugsweise - von innen nach außen - aus Glasfasern, pp′-Aramidfasern, die eine hohe Bruchspannung und eine hohe Zähigkeit besitzen und schließlich aus mittelmoduligen Kohlefasern, die den graduellen Übergang zur Außenhaut bilden.

Vorzugsweise liegt der Faser-E-Modul der Außenhaut im Bereich 235 - 440 GPa, während der E-Modul der Faserstränge abgestuft von innen nach außen zwischen 65 - 90 GPa (Glasfasern), 65 - 180 GPa (Aramidfasern) und 200 - 440 GPa (Kohlefasern) liegt.

Die Erfindung wird nachfolgend an der beigefügten Zeichnung weiter erläutert. Dabei zeigt:
- Fig. 1:: eine schematische teilgeschnittene Ansicht einer Propellerschaufel,
- Fig. 2:: die Propellerschaufel gemäß Fig. 1 im Querschnitt,
- Fig. 3:: eine schematische Ansicht von der Lagenanordnung der Faserstränge,
- Fig. 4:: einen Querschnitt der Propellerschaufel gemäß Fig. 3,
- Fig. 5:: eine alternative Ausführungsform der Propellerschaufel,
- Fig. 6:: die Propellerschaufel gemäß Fig. 5 im Querschnitt,
- Fig. 7:: eine schematische Ansicht einer Bolzenbefestigung im Querschnitt,
- Fig. 8:: eine Rotorschaufel im Querschnitt,
- Fig. 9:: eine schematische teilgeschnittene Ansicht gemäß Fig. 8,
- Fig. 10:: einen Ausschnitt der Schaftumschlingung.

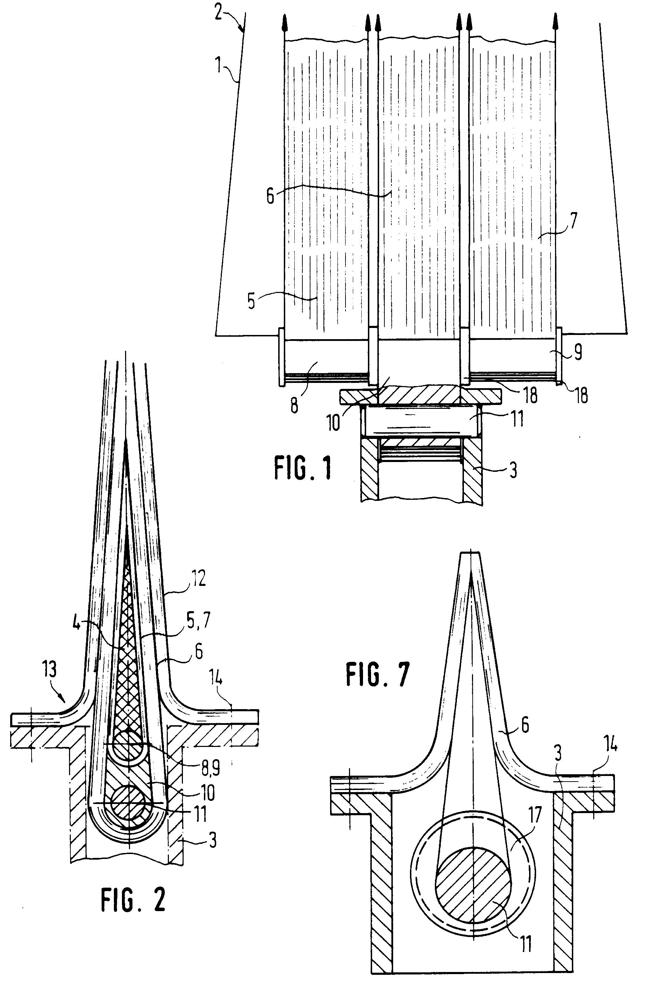

In der schematischen Ansicht gemäß Fig. 1 sind die Umrisse 1 einer Propellerschaufel 2 gezeigt, die an einem Rotor 3 eines nicht dargestellten Propfantriebwerks befestigt ist. Die Propellerschaufel 2 besteht - wie in Fig. 2 erkennbar - aus einem im Querschnitt keilförmigen Schaufelkern 4, der von Fasersträngen 5,6,7 schlaufenartig umschlungen ist. Die axial äußeren Faserstränge 5,7 umschließen dabei Zugbolzen 8,9, die in oder an einem radial einwärts verlaufenden Schaft 10 befestigt sind. Der Schaft 10 ist wiederum am Rotor 3 mittels eines Querbolzens 11 lösbar angebracht. Das mittlere Bündel der Faserstränge 6 umschlingt dabei den Schaft 10, wodurch auf der gesamten Breite der Zugbolzen 8,9 eine fast ununterbrochene Faserschicht aufgebracht ist, die eine günstige Einleitung der im Betrieb auftretende Zugkräfte ermöglicht. Die Faserstränge 5,6,7 sind von einer Außenhaut 12 umgeben, die die gesamte Propellerschaufel 2 bedeckt und im Übergangsbereich zu Rotor 3 zur Bildung eines Flansches 13 ausgeformt ist. Mittels nicht näher dargestellter Befestigungsmittel 14, vorzugsweise Schrauben, ist der Flansch 13 am Rotor 3 befestigt. Beidseitig der Faserstränge 5,6,7 sind Einspannflansche 18 vorgesehen, die ein Querdruckversagen der Faserstränge verhindern.

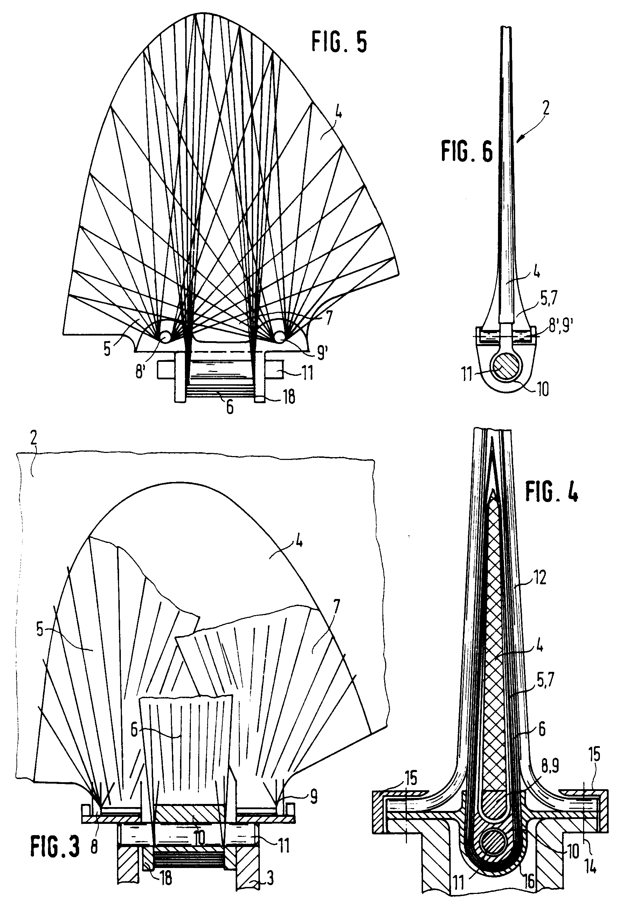

Fig. 3 zeigt eine Ausführungsform der Erfindung, bei der die Zugbolzen 8,9 in Richtung der Schaufelprofilsehne ausgerichtet sind. Die mittleren Faserstränge 6 sind etwa radial nach außen gelegt und umschlingen den Schaufelkern 4. Demgegenüber sind die äußeren Faserstrangbündel 5,7 fächerartig verlegt. Dabei können die Fasern dieser drei Faserstrangbündel 5,6,7 sich gegenseitig lagenweise überkreuzen, um eine bessere Festigkeit der Propellerschaufel 2 zu erreichen.

In Fig. 4 ist ein Querschnitt der Propellerschaufel nach Fig. 3 gezeigt, bei dem zur besseren Einleitung der Fliehkräfte des Flansches 13 in den Rotor 3 Klemmplatten 15 mit dem als Schrauben 14 ausgebildeten Befestigungsmittel angebracht sind. Ferner ist zwischen Rotor 3 und Flansch 13 ein tellerartiges Dämpfungsglied 16 angebracht, das formgenau der Kontur der Faserstränge 6 angepaßt ist und deren Schutz gegenüber Einwirkungen von radial innen gewährleistet.

Die Ausführungsform gemäß Fig. 5 weist Bolzen 8,9 auf, die quer zur Schaufelprofilsehne verlaufen. Die axial äußeren Faserstrangbündel 5 und 7 sind wie in der Ausführungsform gemäß Fig. 3 fächerartig verlegt. Fig. 6 zeigt diese Anordnung im Querschnitt. Dabei ist die Materialanhäufung durch die Faserstränge 5,7 im Bereich der Zugbolzen 8,9 zu sehen, die eine Versteifung des Rotorblattes 2 in Richtung normal zur Blattfläche bewirken.

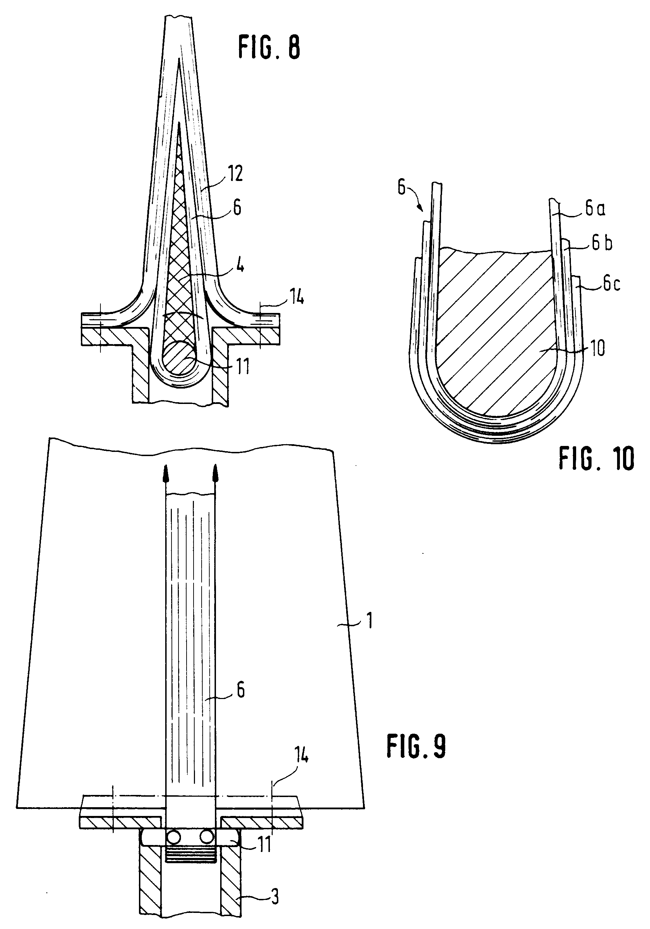

Fig. 7 zeigt eine Anordnung der Befestigung des Zugbolzens 11 im Rotor 3. Dies geschieht mittels zweier im Rotor 3 gelagerte Exzenterbuchsen 17, die jede ein Ende des Querbolzens 11 aufnehmen. Durch Verdrehen der Exzenterbuchsen 17 läßt sich ein Spielausgleich zwischen Querbolzenbohrung 11 und Flanschebene der Außenhaut 13 gewährleisten und außerdem die Zugspannung auf die Faserstränge einstellen und so eine definierte Vorspannung erzielten. In der gezeigten Stellung befinden sich die Exzenterbuchsen 17 in der Stellung maximaler Zugspannung.

In Fig. 8 ist eine alternative Ausführung einer Rotorschaufel im Querschnitt gezeigt, bei der Faserstränge 6, die von einer Außenhaut 12 umgeben sind um einen im Rotor 3 gelagerten Querbolzen 11 geschlungen sind. Die Außenhaut 12 ist mit Befestigungsmitteln 14, vorzugsweise Schrauben am Rotor 3 angebracht. Wie in Fig. 9 gezeigt, verlaufen die den Querbolzen 11 umschlingenden Faserstränge in radialer Richtung.

Fig. 10 zeigt die Umschlingung des Schaftes 10 oder alternativ des Querbolzens 11 durch die Faserstränge 6 im Detail. Dabei sind die übereinander liegenden Schichten 6a, 6b und 6c aus unterschiedlichen Fasern mit von innen nach außen zunehmendem E-Modul aufgebaut.

## Patentansprüche

1. Propellerschaufel aus faserverstärktem Werkstoff mit einem Schaufelkern (4) und einem sich radial zu einem Rotor (3) hin erstreckenden Schaufelschaft (10), welcher mittels Querbolzen (11) lösbar am Rotor (3) befestigbar ist, wobei ein im wesentlichen radial verlaufender Faserstrang (6) den Schaufelschaft (10) und Schaufelkern (4) umschlingt und von einer Außenhaut (12) überzogen ist, die im Übergangsbereich zum Rotor (3) zur Bildung eines im wesentlichen senkrecht zur Schaufelebene angeordneten am Rotor befestigbaren Flansches (13) ausgeformt ist, dadurch gekennzeichnet, daß sich unter der Außenhaut (12) an den im Mittelbereich der Schaufel angeordneten Faserstrang (6) beidseitig äußere Faserstänge (5, 7) anschließen, welche benachbart zum mittleren Faserstrang (6) den Schaufelkern (4) und Zugbolzen (8, 9; 8', 9') umschlingen, welche ihrerseits am Schaft (10) befestigt sind.

2. Propellerschaufel nach Anspruch 1, dadurch gekennzeichnet, daß die Zugbolzen (8', 9') in Richtung der Schaufelprofilsehne ausgerichtet sind.

3. Propellerschaufel nach Anspruch 1 oder 2, dadurch gekennzeichnet, daß die Zugbolzen (8, 9) senkrecht zur Schaufelprofilsehne ausgerichtet sind.

4. Propellerschaufel nach einem der Ansprüche 1 bis 3, dadurch gekennzeichnet, daß der Querbolzen (11) in rotorseitig angebrachten Exzenterbuchsen (17) gelagert ist.

5. Propellerschaufel nach einem der Ansprüche 1 bis 4, dadurch gekennzeichnet, daß zwischen Flansch (13) und Rotor (3) ein tellerartiges Dämpfungsglied (16) vorgesehen ist, das in seinem Mittelteil an die Kontur des Schaftes (10) angepaßt ist.

6. Propellerschaufel nach einem der Ansprüche 1 bis 5, dadurch gekennzeichnet, daß die Faserstränge (5, 6, 7) fächerartig und sich gegenseitig überkreuzend verlegt sind.

7. Propellerschaufel nach einem der Ansprüche 1 bis 6, dadurch gekennzeichnet, daß der Schaufelkern (84) ein schubsteifer Leichtbaukern ist.

8. Propellerschaufel nach Anspruch 7, dadurch gekennzeichnet, daß die Fasern der Außenhaut (12) einen hohen E-Modul und die innenliegenden Faserstränge (5, 6, 7) einen niedrigen E-Modul haben.

9. Propellerschaufel nach einem der Ansprüche 1 bis 6, dadurch gekennzeichnet, daß die Faserstränge (5, 6, 7) aus mindestens zwei Lagen aufgebaut sind, wobei der Längs-E-Modul der verwendeten Fasern von innen nach außen zunimmt.

10. Propellerschaufel nach Anspruch 8, dadurch gekennzeichnet, daß der Fußbereich (13) der Außenhaut (12) zwischengeschäftete Faserlagen mit geringem E-Modul aufweist.

11. Propellerschaufel nach einem der vorhergehenden Ansprüche, dadruch gekennzeichnet, daß die Außenhaut (12) im wesentlichen aus kohlefaserverstärktem Kunststoff besteht, der von einer Erosionsschicht umgeben ist.

12. Propellerschaufel nach einem der vorhergehenden Ansprüche, dadurch gekennzeichnet, daß die Faserstränge (5, 6, 7) aus übereinanderliegenden Schichten von Glas-(6a), p,p'-Aramid-(6b) und Kohlefasern (6c) besteht, die jeweils mit einer Kunststoffmatrix versetzt sind.

13. Propellerschaufel nach einem der vorhergehenden Ansprüche, dadurch gekennzeichnet, daß die Schaufelbereiche der Faserstränge (5, 6, 7) seitliche Einspannungen aufweisen.

## Claims

1. Propeller blade of fibre-reinforced material having a blade core (4) and a blade shaft (10), extending radially to a rotor (3) and detachably securable on the rotor (3) by means of cross pins (11), a substantially radially extending fibre bundle (6) looping round the blade shaft (10) and blade core (4) and coated by an outer skin (12) which is shaped in the region of transition to the rotor (3) to form a flange (13) arranged substantially perpendicularly to the blade plane and securable on the rotor, characterised in that external fibre bundles (5, 7) are adjacent on both sides below the outer skin (12) to the fibre bundle (6) arranged in the central region of the blade, these external fibre bundles loop round the blade core (4) and tension bolts (8, 9; 8', 9') adjacently to the central fibre bundle (6), the blade core and tension bolts being in turn secured on the shaft (10).

2. Propeller blade according to claim 1, characterised in that the tension bolts (8', 9') are aligned in the direction of the blade profile chord.

3. Propeller blade according to claim 1 or 2, characterised in that the tension bolts (8, 9) are aligned perpendicularly to the blade profile chord.

4. Propeller blade according to one of claims 1 to 3, characterised in that the cross-pin (11) is mounted in eccentric bushings (17) fitted on the rotor side.

5. Propeller blade according to one of claims 1 to 4, characterised in that between flange (13) and rotor (3) there is provided a dish-like damping element (16) which is adapted in its centre portion to the contour of the shaft (10).

6. Propeller blade according to one of claims 1 to 5, characterised in that the fibre bundles (5, 6, 7) are laid out like a fan and in a mutually intersecting manner.

7. Propeller blade according to one of claims 1 to 6, characterised in that the blade core (4) is a shear-resistant light-construction core.

8. Propeller blade according to claim 7, characterised in that the fibres of the outer skin (12) have a high E-modulus and the inner fibre bundles (5, 6, 7) have a low E-modulus.

9. Propeller blade according to one of claims 1 to 6, characterised in that the fibre bundles (5, 6, 7) are formed of at least two layers, the longitudinal E-modulus of the fibres used increasing from the inside to the outside.

10. Propeller blade according to claim 8, characterised in that the base region (13) of the outer skin (12) has interleaved fibre layers with a low E-modulus.

11. Propeller blade according to one of the preceding claims, characterised in that the outer skin (12) substantially comprises carbon-fibre-reinforced plastics material which is surrounded by an erosion layer.

12. Propeller blade according to one of the preceding claims, characterised in that the fibre bundles (5, 6, 7) consist of superposed layers of glass (6a), p,p'-aramide (6b) and carbon fibres (6c) which are respectively impregnated with a plastics matrix.

13. Propeller blade according to one of the preceding claims, characterised in that the blade regions of the fibre bundles (5, 6, 7) have lateral constrictions.

## Revendications

1. Pale d'hélice en un matériau renforcé de fibres, comprenant une âme de pale (4) et un corps de base de pale (10) s'étendant radialement en direction d'un rotor (3) et pouvant être fixé de manière amovible à ce rotor (3), au moyen de broches transversales (11), un faisceau de fibres (6), qui s'étend sensiblement de manière radiale, s'enroulant autour du corps de base de pale (10) et de l'âme de pale (4), et étant revêtu d'une enveloppe extérieure (12), qui dans la zone de transition vers le rotor (3), est façonnée pour former un flasque (13) disposé sensiblement de manière perpendiculaire au plan de la pale, et pouvant être fixé au rotor, caractérisée en ce que sous l'enveloppe extérieure (12), au faisceau de fibres (6) disposé dans la zone centrale de la pale, se raccordent, des deux côtés, des faisceaux de fibres (5, 7) extérieurs, qui, au voisinage du faisceau de fibres central (6), s'enroulent autour de l'âme de pale (4) et de broches de traction (8, 9; 8', 9'), qui pour leur part, sont fixées au corps de base de pale (10).

2. Pale d'hélice selon la revendication 1, caractérisée en ce que les broches de traction (8', 9') sont orientées dans la direction de l'arc du profil de pale.

3. Pale d'hélice selon la revendication 1 ou 2, caractérisée en ce que les broches de traction (8, 9) sont orientées perpendiculairement à l'arc du profil de pale.

4. Pale d'hélice selon l'une des revendications 1 à 3, caractérisée en ce que la broche transversale (11) est montée dans des douilles d'excentrique (17) placées dans le rotor.

5. Pale d'hélice selon l'une des revendications 1 à 4, caractérisée en ce qu'entre le flasque (13) et le rotor (3) est prévu un organe d'amortissement (16) en forme de coupelle, qui dans sa partie centrale est adaptée au contour du corps de base (10).

6. Pale d'hélice selon l'une des revendications 1 à 5, caractérisée en ce que les faisceaux de fibres (5, 6, 7) sont posés en éventail et se croisent mutuellement.

7. Pale d'hélice selon l'une des revendications 1 à 6, caractérisée en ce que l'âme de pale (4) est une âme de construction allégée, rigide au cisaillement.

8. Pale d'hélice selon la revendication 7, caractérisée en ce que les fibres de l'enveloppe extérieure (12) présentent un module d'élasticité E élevé, et les faisceaux de fibres (5, 6, 7) situés à l'intérieur, présentent un module d'élasticité E faible.

9. Pale d'hélice selon l'une des revendications 1 à 6, caractérisée en ce que les faisceaux de fibres (5, 6, 7) sont constitués d'au moins deux couches, le module d'élasticité longitudinale E des fibres utilisées augmentant de l'intérieur vers l'extérieur.

10. Pale d'hélice selon la revendication 8, caractérisée en ce que la zone de pied (13) de l'enveloppe extérieure (12) comporte des couches de fibres à faible module d'élasticité E intercalées.

11. Pale d'hélice selon l'une des revendications précédentes, caractérisée en ce que l'enveloppe extérieure (12) est essentiellement constituée de matière plastique renforcée de fibres de carbone, qui est revêtue d'une couche d'érosion.

12. Pale d'hélice selon l'une des revendications précédentes, caractérisée en ce que les faisceaux de fibres (5, 6, 7) sont constitués de couches superposées de fibres de verre (6a), de fibres p,p'-aramides (6b) et de fibres de carbone, qui sont insérées dans une matrice de matière plastique.

13. Pale d'hélice selon l'une des revendications précédentes, caractérisée en ce que les zones de pale des faisceaux de fibres (5, 6, 7) sont enserrées latéralement.
